# EUROPÄISCHE PATENTANMELDUNG

(11) **EP 0 951 186 A2**
(43) Veröffentlichungstag der Anmeldung: **20.10.1999**
(21) Anmeldenummer: 99106440.3
(22) Anmeldetag: 29.03.1999
(51) Int. Cl.: H04Q 3/00, H04Q 11/04

(54) **Verfahren in einem Kommunikationsnetz zur Vermittlung von Nachrichten zu Kommunikationsendgeräten und eine Vorrichtung zur Durchführung des Verfahrens**

(30) Priorität: 17.04.1998 DE 19817156
(71) Anmelder: SIEMENS AKTIENGESELLSCHAFT, 80333 München (DE)
(72) Erfinder: Hagemann, Joachim, Dr., 81371 München (DE)

(57) **Zusammenfassung**

Die Erfindung betrifft ein Verfahren in einem Telekommunikationsnetz oder Datenkommunikationnetz zur Behandlung von eintreffenden Verbindungswünschen. Die Teilnehmer möchten dabei verschiedene Arten von Kommunikation und Datenübertragung betreiben, wie Sprachtelefonie, Senden von Faxen etc.

Aufgabe der Erfindung ist es, eine Möglichkeit anzugeben, für einen Teilnehmer in einem Kommunikationsnetz eintreffende Nachrichten an das jeweils geeignetste Endgerät weiter zu leiten.

## Beschreibung

Die Erfindung betrifft ein Verfahren in einem Telekommunikationsnetz oder Datenkommunikationnetz zur Behandlung von eintreffenden Verbindungswünschen. Es wird davon ausgegangen, daß Teilnehmer verschiedene Arten von Kommunikation und Datenübertragung, wie Sprachtelefonie, Senden von Faxen etc. betreiben wollen.
Zur Zeit erfolgt Sprachtelefonie- und Fax-Service in der Regel in switch-basierten Telekommunikationsnetzwerken, es zeichnet sich aber ein Bedeutungsgewinn der IP-basierten Datenkommunikationsnetzwerke für die oben genannten und neue Kommunikationsdienste ab.

Der Teilnehmer hat dabei in der Regel mehrere Möglichkeiten:
- für jede Art von Kommunikationsdaten wird ein geeignetes Gerät verwendet. Dies bewirkt aber, daß die verschiedenen Geräte auch unterschiedliche Telefonnummern oder Adressen erhalten. Der anrufende Teilnehmer muß also für einen potentiellen Kommunikationspartner mehrere Nummern oder Adressen speichern, sowie die jeweilige Zuordnung zur gewünschten Kommunikationsform.
- die Verwendung von Umschaltern (sog. 'Fax-Weiche') ermöglicht z. B. das Betreiben von Fax-Gerät und Telefon an einer Anschlußdose und damit das Telefonieren und Senden oder Empfangen von Faxen über dieselbe Telefonnummer. Nach dem Annehmen der Verbindung wird auf eine spezielle Fax-Signalisierung gewartet, und der Anruf entsprechend weiter-behandelt.Dies ist jedoch eine Speziallösung, die zudem für den Anrufenden immer Gebühren erzeugt, da jeder Anruf angenommen wird, für den Fall, daß es sich um die Übertragung eines Faxes handelt.
- die Verwendung von Multifunktionsgeräten, etwa eines PCs. Durch spezielle Konvertierungsverfahren können z. B. Faxe in Elektronische Mails umgewandelt werden.
- Ähnliche technische Lösungen wie die Fax-Weiche gewinnen in Telekommunikations- und Datenkommunikationsnetzwerken an Bedeutung. In Privathaushalten sind Telefon und vernetzte PCs meist an derselben Telefonleitung angeschlossen, wobei je nach Modem-Variante oder gewählten ISDN-Anschluß erhebliche Unterschiede bestehen. Die Computer-Telephonie-Integration (CTI) etwa gemäß Telephony Application Programming Interface (TAPI) oder dem neueren JTAPI (Java Telephony Application Interface) berücksichtigen alle gängigen technischen Lösungen, Computer und Telefon über dieselbe Leitung an das Netzwerk anzuschließen. Eine andere Möglichkeit ist, daß Computer und Telefon über zwei verschiedene Leitungen oder über gekoppelte Netze (etwa Telefon-Leitung und LAN-Anschluß in Unternehmensnetzen) miteinander assoziert sind.

Aufgabe der Erfindung ist es, eine Möglichkeit anzugeben, für einen Teilnehmer in einem Kommunikationsnetz eintreffende Nachrichten an das jeweils geeignetste Endgerät weiterzuleiten.

Diese Aufgabe wird gelöst durch ein Verfahren gemäß Patentanspruch 1.

Mit einem Teledienst wird im folgenden die Art der Informationsübertragung beschrieben, also zum Beispiel Sprachübertragung, Faxübertragung oder elektronische Formen der Kommunikation und Datenübertragung.

Ein Telekommunikations- oder Datenkommunikationsnetz besteht vor allem aus miteinander verbundene Netzknoten. Diese besitzen in der Regel die Möglichkeiten um aus einer eintreffenden Nachricht, wie einen Verbindungswunsch, die Zieladresse auszuwerten und anhand bekannter Informationen weiterzuleiten.

Bei einem Verbindungsaufbauwunsch wird nun bereits vor dem Eintreffen beim Zielteilnehmer im Netz festgestellt, um welchen Teledienst es sich handeln muß. Dies kann durch spezielle Signaturen geschehen, die im Verbindungsaufbauwunsch mitgesendet und von einem Vermittlungsknoten ausgewertet werden.
Der gewünschte Zielteilnehmer kann durch die Zielrufnummer bzw. Zieladresse ermittelt werden.
Diese beiden Informationen werden nun an ein geeignetes Netzelement in diesem Kommunikationsnetz weitergeleitet. Dieses Netzelement ermittelt dann, ob die angewählte Nummer für die Art der Datenübertragung geeignet ist. Falls dies nicht der Fall ist, kann ein 'Ersatz'-Endgerät und dessen Rufnummer ermittelt werden, zu dem dann die gewünschte Verbindung aufgebaut wird.

Der wesentliche Vorteil dieses Vorgehens ist, daß mit jedem Teilnehmer im Netz über eine quasi eindeutige Nummer auf verschiedene Arten kommuniziert werden kann. Der Anrufende muß nur diese eine Nummer kennen, die korrekte Weitervermittlung seines Anrufes an ein passendes Endgerät wird von Instanzen im Netz übernommen. Das Senden von Faxen wird damit zum Beispiel wesentlich erleichtert, da wegen der unidirektionalen Übertragung von der Empfängerseite eine Übertragung immer möglich ist, oftmals ist aber auf der Senderseite die spezielle Nummer des Fax-Gerätes oder eines anderen geeigneten Endgerätes nicht bekannt.

Diese Aufgabe wird auch gelöst durch eine Vorrichtung gemäß Patentanspruch 9.

Dabei müssen im Telekommunikations- oder Datenkommunikationsnetz Mittel vorhanden sein zur Auswertung eines eintreffenden Verbindungs- oder Ürtragungswunsches. Neben der Zielrufnummer muß ermittelbar sein, welcher Art die gewünschten Kommunikation ist.
Zusätzlich existiert etwa im Netz oder im Endgerät eine gespeicherte Darstellung der benötigten Information zur Auswertung der ermittelten Information. Dabei handelt es sich insbesondere um die einzelnen, einem Teilnehmer zugeordneten Geräte und deren Charakteristika, sowie Beziehungen zwischen Geräten.
Anhand dieser Informationen wird der Verbindungsaufbau- oder Datenübertragungswunsch im Netz durch Vermittlungsstellen, sofern vorhanden, an das am besten geeignete Endgerät weitervermittelt.

Vorteilhafte Ausgestaltungen und Weiterbildungen sind in den Unteransprüchen angegeben.

Bei der Vermittlung nach dem erfindungsgemäßen Verfahren ist für die Ermittlung der Zieladresse oder -rufnummer ein zentrales Netzelement oder (wie im Internet) cooperierende dezentrale Netzelemente verantwortlich.

Diese Ermittlung kann auf verschiedene Weise geschehen. Eine Möglichkeit stellt eine zentrale Datenbank dar, die diesen Netzelementen zur Verfügung steht. Dies wird insbesondere dann Verwendung finden, wenn eine Datenbank dieser Art bereits existiert und durch geringen Aufwand ergänzt und erweitert werden kann. Die Administration der Datenbank wird in der Regel von einer zentralen Stelle durchgeführt. Der Zugriff auf eine solche Datenbank und damit die Ermittlung der passenden Zielrufnummer oder -adresse geschieht in der Regel sehr schnell. Durch die zentrale Datenhaltung ist die Konsistenz der Daten gesichert.

In einem anderen Fall, wenn eine solche Datenbank nicht zur Verfügung steht, oder eine häufige Änderung der Einträge durch eine zentrale Administration zu aufwendig ist, muß eine andere Lösung des Problems gefunden werden. Es kann also auch sinnvoll sein, daß diese Informationen in dem Endgerät abgespeichert sind. Dabei führt das zentrale Netzelement die Abfrage nach der geeigneten Zielrufnummer oder -adresse nicht in einer zentralen Datenbank durch, sondern beim jeweiligen angewählten Endgerät. Dies geschieht, indem durch eine Abfrage die ermittelten Daten (Typ der Datenübertragung) zu dem Endgerät übertragen werden und dieses dann als Antwort die gewünschte Zielrufnummer an das zentrale Netzelement übermittelt.
Dabei kann die Pflege der Informationen, die in den Endgeräten abgespeichert ist, von den Teilnehmern selber übernommen werden. Bei der Computer Telephony Integration (CTI) etwa spielen beide Lösungen eine sich ergänzende Rolle.

Auch die Überprüfung der Kompatibilität von rufendem und gerufenem Endgerät kann auf verschiedene Weisen erfolgen.

In einer zentralen Datenbank, wie sie bereits weiter oben beschrieben wurde, können zusätzlich Vermerke angebracht werden, die auf die technischen Möglichkeiten hinweisen, die ein einer Nummer zugeordnetes Endgerät hat. Damit sind insbesondere die Arten der Telekommunikation gemeint, die dieses Gerät bedienen kann, also den entsprechenden Teledienst. Dabei ist es durchaus denkbar, daß ein Endgerät verschiedene Arten von Telediensten bearbeiten kann, etwa ein Telefon mit integriertem Faxgerät oder ein PC mit der entsprechenden Software.
Zusätzlich kann gegebenenfalls ein Software Download angestoßen werden und dadurch das Endgerät auf die erforderliche Funktionalität hochgerüstet werden.

Ein gerufenes Endgerät ist also kompatibel zu einem rufenden Endgerät, wenn es den Teledienst bearbeiten kann, der im Verbindungsaufbau- oder Datenübertragungssignal angefordert wird.

Eine andere Lösung wäre ein 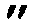 Testanruf", der von der zentralen Netzeinheit beim Endgerät durchgeführt wird. Hier wird wiederum eine Abfrage (wie bereits weiter oben beschrieben) durchgeführt, bei der das Endgerät abgefragt wird, ob es zu einem speziellen Datendienst kompatibel ist. Dies geschieht ohne einen Verbindungsaufbau und vor dem eigentlichen Verbindungsaufbau bzw. vor der eigentlichen Datenübertragung. Hier ist es möglich, daß danach alle, für einen bestimmten Benutzer eingetragenen Endgeräte auf diese Weise befragt werden und die Nachricht / die Verbindung zu demjenigen Endgerät durchgestellt wird, welches als erstes eine Kompatibilität meldet.

Sofern es sich bei der Kommunikation um eine unidirektionale Übertragung handelt, ist es aus Sicht des Benutzers wünschenswert, daß er eine Benachrichtigung über das Eintreffen einer Nachricht für ihn erhält. Dies ist insbesondere der Fall, wenn vor dem Übertragen der Nachricht eine erfindungsgemäße Umlenkung stattgefunden hat.

Dabei sind verschiedene Möglichkeiten denkbar.
Zum ersten muß festgelegt werden, wohin diese Benachrichtigung gesendet werden muß. Der Zielteilnehmer kann eine Grundeinstellung vorgeben, auf welchem Gerät er eine Benachrichtigung empfangen möchte. Weiterhin ist etwa denkbar, daß die Benachrichtigung an das Endgerät geschickt wird, welches vom gewünschten Teilnehmer (z. B. innerhalb eines Zeitrahmens) als letztes benutzt wurde.
Weiterhin sollte die Form der Benachrichtigung festgelegt werden können. Hier sind ebenfalls viele Möglichkeiten denkbar.
Zum einen gibt es die Benachrichtigung in Form einer Ansage, etwa über ein Telefon oder auf einen Anrufbeantworter.
Es sind aber auch verschiedene Möglichkeiten der visuellen Anzeige denkbar, zum Beispiel am Telefongerät des Teilnehmers in Form einer Lampe oder eines Symbols im Anzeigefeld, was aufleuchtet, sobald eine Nachricht vorliegt. Weiterhin kann die Anzeige natürlich auch in Form einer Short Message zu einem Mobiltelefon (GSM) oder als Elektronische Mail oder Fax versendet werden.

Auch auf Seiten des Senders kann eine Benachrichtigungsfunktion, etwa in Form einer Ansage sinnvoll sein. In dem Fall etwa, wenn eine Übertragung nicht durchgeführt werden kann, weil der Empfänger kein geeignetes Endgerät hat (z. B. ein Faxgerät oder einen PC mit Fax-Modul), bekommt der Sender einen kurzen Hinweis mit dem Grund für den Fehlschlag mitgeteilt.

In Datenkommunikationsnetzen gibt es eine Vielfalt von zentralen und dezentralen Lösungsmöglichkeiten. Die extremen Lösungen (Hinterlegung im Endgerät bzw. zentrale Datenbank) wurden schon skizziert. Andere, verteilte Lösungen sind denkbar.

Im folgenden wird die Erfindung anhand von Ausführungsbeispielen erläutert. Dabei zeigen
Figur 1 einen Teil eines Kommunikationsnetzes mit Teilnehmern (TNx) und verschiedenen Arten von Endgeräten (KE, FAX, PC) und
Figur 2 schematisch eine Möglichkeit der Verarbeitung eines Verbindungsaufbauwunsches in einem Telekommunikationsnetz, welcher von einem Teilnehmer (KE) gesendet wird. Dies ist die gängigste Form einer sogenannten zentralen Intelligenten Netzwerk (IN) Lösung.
In einigen bekannten Arten von Telekommunikationsnetzen gibt es bereits Klassen von vordefinierten Telediensten.
Dazu gehören zum Beispiel GSM Mobilfunknetze. In der Norm GSM 02.03 werden drei Kategorien von Telediensten aufgeführt:
- Sprachübermittlung (inklusive Notruf)
- Short Message Service SMS
- Facsimile Übertragung.

Auch bei ISDN werden die zu unterstützenden Teledienste definiert (siehe dazu ITU Rec. I.240)
- Telefonie
- Teletex
- Telefax
- Mixed Mode
- Videotex
- Telex
Weitere Teledienste bei ISDN sind denkbar.

In der Norm ITU-T I.210, Annex C sind Attribute zur Beschreibung der Teledienste von ISDN aufgelistet. Hier ist insbesondere der Typ der Benutzerinformation ('Type of user information') zu beachten. Dieser Typ kann als Signalisierungsinformation verwendet werden.

Da bei diesen erwähnten Netzen bereits Teledienste ('Teleservices') definiert und beschrieben sind, bietet es sich an, diese verfügbaren Informationen zu verwenden. In diesen Fällen muß auf der Benutzerseite keine Änderung vorgenommen werden.

Falls kein 'Type of user information' mitgeliefert wird, können auch andere Attribute zur Beschreibung der Teledienste verwendet werden (siehe ITU I.210), welche in Kombination ebenfalls wieder einen eindeutigen Rückschluß auf die Art des verwendeten Teledienstes zulassen.
Dabei ist es auch vorstellbar, daß Dienstqualität-Merkmale eingeführt werden, die z. B. Aussagen über die Übermittlungsqualität, Fehlerbehebung, Authentifizierung oder Verschlüsselungsmöglichkeiten treffen. Diese könnten dann zur Auswahl eines Gerätes herangezogen werden, wenn für einen Teilnehmer mehrere Geräte für den selben Teledienst zur Verfügung stehen. So wird die optimale Auslastung vom Netz und den Endgeräten gewährleistet.

In einem Ausführungsbeispiel ist neben der normalen Sprachkommunikation noch die Möglichkeit der Übertragung von Faxen gegeben.
Der für die Versendung von Faxen relevante Teledienst in einem ISDN Netz ist definiert und beschrieben in der Norm ITU-T Rec. I.241.3.

In der Datenkommunikation sind solche Service-Kennzeichnungen für Daten-Services geplant und werden gerade von einer IETF Study Group normiert. Indirekte Service-Kennzeichnungen wie etwa File Transfer Protocol (FTP) gibt es schon länger. Die zur Zeit konzipierten Layer4 Router-Switches nutzen den Service-Typ (etwa FTP) konsequent aus.

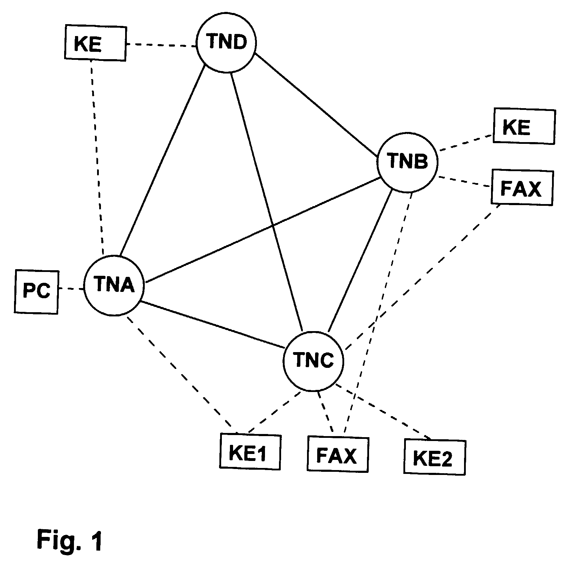

Figur 1 zeigt dabei einen möglichen Ausschnitt aus einem Telekommunikationsnetz. Dabei können vier Teilnehmer (TNA, TNB, TNC und TND) miteinander kommunizieren. Jeder dieser Teilnehmer hat mindestens ein Endgerät zu seiner Verfügung. Bei diesem beispielhaften Netzaufbau handelt sich um spezielle Fax-Geräte (FAX), Telefone (KE, KE1), Mobiltelefone (KE2) und Personal Computer (PC). Andere Möglichkeiten des Netzaufbaus sind selbstverständlich denkbar.

Jeder Teilnehmer hat Zugriff auf verschiedene Endgeräte, ein Faxgerät etwa kann natürlich von mehreren Personen benutzt werden zum Empfang und Versenden von Faxen. Dies gilt ebenso für alle anderen Arten von Endgeräten, insbesondere für Spezialgeräte wie Mobiltelefone.
Nach welchen Kriterien diese Endgeräte benutzt werden, ist jedem Teilnehmer überlassen. So können mehrere Mitarbeiter einer Firma das selbe Faxgerät verwenden. Ebenso kann ein Mitarbeiter an ihn gerichtete Faxe tagsüber in die Firma und am Abend nach Hause umleiten lassen.

Zur Realisierung der gewünschten Funktion wird die Technik des 'Intelligenten Netzes' verwendet. Ein Intelligentes Netz ist eine Architektur, die es einem Netzbetreiber oder einem anderen Dienstteilnehmer in einem Telekommunikationsnetz ermöglicht, Mehrwertdienste für den Dienstnutzer anzubieten.
Diese, dem Fachmann bekannte Technik beinhaltet insbesondere spezielle Komponenten, die die notwendige Datenhaltung ermöglichen und neben der einfachen Realisierung dieser Dienste auch die zuverlässige und sichere Administration der gespeicherten Daten.

Eine zentrale Komponente des Intelligenten Netzes ist für die Speicherung der benötigten Informationen zuständig.
Dies ist insbesondere die Verknüpfung von Informationen über Teilnehmer, deren Rufnummern, sowie die Zielrufnummern zusätzlicher Spezialgeräte und Informationen über die Art der jeweiligen Datenübertragung. Es sind auch zusätzliche Regeln denkbar, die die Weiterleitung etwa nach der Uhrzeit steuern, nach der Telefonnummer des Anrufenden (z. B. vertrauliche Sendungen werden gesondert behandelt, die Trennung von privaten und geschäftlichen Sendungen) oder ähnlichem.

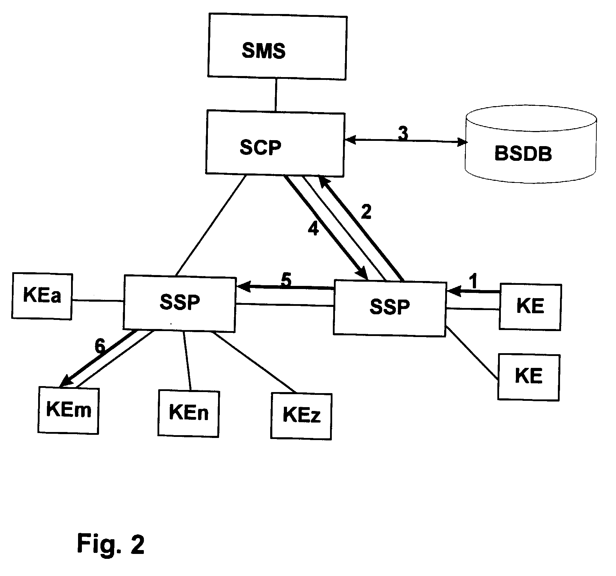

In Figur 2 ist ein Grundablauf eines erfolgreichen Verbindungsaufbaues skizziert. Die Darstellung stellt nicht den kompletten Netzaufbau dar, sondern nur die für den Verbindungsaufbau wesentlich beteiligten Komponenten.

Auf der Sendeseite möchte ein Teilnehmer mittels eines geeigneten Kommunikationsendgerätes (KE) ein Fax an einen zweiten Teilnehmer des Kommunikationsnetzes senden (1).

Der Verbindungsaufbauwunsch trifft bei einer ersten Vermittlungsstelle (Service Switching Point, SSP) ein.
Hier erfolgt eine Verarbeitung des Aufrufes nach dem Basic Call State Model (BCSM) aus dem Capability Set 1 (CS-1) für Intelligente Netze. Es wird mit sogenannten Detection Points gearbeitet, der SSP weiß also beim Bearbeiten des eintreffenden Rufes, daß ein IN-Ruf vorliegen kann und also eine zentrale Instanz im IN nach weiteren Anweisungen gefragt werden muß.

Der SSP kann weiterhin aus dem eingehenden Verbindungsaufbauwunsch ermitteln, um welche Art der Übertragung, also um welchen Teledienst es sich handelt.
So muß die SCP-Anfrage Informationen enthalten über den gewünschten Teledienst und über die Zielrufnummer, also den angewählten Teilnehmer (2).

Die zentrale Netz-Komponente zur Steuerung der Dienste ist der Service Control Point (SCP). Der SCP empfängt eine Anfrage des SSP. Zusätzlich hat der SCP Zugang zu den Informationen über die Teilnehmer des Kommunikationsnetzes. Aus den mitgelieferten Informationen und dieser zentralen Datenbank (BSDB) kann der SCP nun die Zielrufnummer ermitteln (3).

Insbesondere wenn der ermittelte Teledienst 'Telefax' ist, das bei der angewählte Nummer angeschlossene Endgerät ist jedoch kein Fax-Gerät sondern z. B. ein herkömmlicher Telefonapparat, der ein Fax nicht empfangen kann, kommt der Vorteil des erfindungsgemäßen Vorgehens zur Wirkung.

Der Absender der Nachricht hat oft nur Kenntnis über eine Telefon-Nummer des von ihm gewünschten Kommunikationspartners. So geschieht es häufig, daß ein Sender per Faxgerät mit Wahlwiederholung immer wieder vergeblich versucht, eine Nachricht zu senden.

Die vom SCP ermittelte neue Zielrufnummer wird nun als Antwort auf die Anfrage an den SSP zurückgesendet (4). Diese Zielrufnummer kann sich von der ursprünglichen Rufnummer unterscheiden.

Der Vermittlungsknoten (SSP) kann nun die Verbindung mit der neuen ermittelten Zielrufnummer bzw. dem dazugehörigen Endgerät (KEm) wie üblich aufbauen (5), (6).

Möglicherweise ist für den gewünschten Teilnehmer kein passendes Endgerät (z. B. ein Faxgerät) in der Datenbank verzeichnet. Dann kann der SCP keine Zielrufnummer ermitteln. In diesem Fall könnte der SSP eine Ansage abspielen oder eine Nachricht generieren, die dem Sender der Ursprungsnachricht zugestellt wird und ihn darüber informiert, das ein Verbindungsaufbau nicht möglich ist. Zusätzlich könnten weitere Informationen über den Grund des Scheiterns übermittelt werden.

### Literaturverzeichnis

### ITU-T I.240

Integrated Services Digital Network (ISDN)
Service Capabilities
Definition of Teleservices
ITU-T Recommendation I.240 (Extract from the Blue Book, Fasc. III.7), ITU 1988, 1993

### ITU-T I.241.3

Integrated Services Digital Network (ISDN)
Service Capabilities
Teleservices Supported by an ISDN: Telefax4
ITU-T Recommendation I.241.3 (Extract from the Blue Book, Fasc. III.7), ITU 1988, 1993

### ITU-T I.210

Integrated Services Digital Network (ISDN)
Service Capabilities
Principles of Telecommunication Services supported by an ISDN and the means to describe them
ITU-T Recommendation I.210, 03/93

### ETS 300 502

European digital cellular telecommunication system (Phase 2);
Teleservices supported by a GSM, Public Land Mobile Network (PLMN), (GSM 02.03), September 1994

### Abkürzungsverzeichnis

- CTI: Computer Telephony Integration
- GSM: Global System for Mobile Communication
- IETF: Internet Engineering Task Force
- IN: Intelligent Network
- ISDN: Integrated Services Digital Network
- ITU: International Telecommunication Union
- JTAPI: Java Telephony Application Interface
- SMS: Short Message Service
- TAPI: Telephony Application Interface

## Patentansprüche

**1.** Verfahren für Vermittlung von Nachrichten in einem Kommunikationsnetz, wobei
- ein rufendes Endgerät ein Verbindungsaufbau- oder Datenübertragungssignal sendet, und
- festgestellt wird, um welche Art von Teledienst es sich bei dem Verbindungswunsch handelt und
- ein geeignetes Netzelement in diesem Kommunikationsnetz über den Verbindungsaufbauwunsch informiert wird, und
- geprüft wird, ob das gerufene Endgerät den Verbindungswunsch erfüllen kann und
- falls dies nicht der Fall ist, der Verbindungswunsch an ein kompatibles Endgerät umgeleitet wird.

**2.** Verfahren nach Patentanspruch 1,
dadurch gekennzeichnet, daß
das Netzelement in diesem Kommunikationsnetz die Umleitungsadresse eines kompatiblen Endgerätes ermittelt aus einer Datenbank in diesem Kommunikationsnetz.

**3.** Verfahren nach Patentanspruch 1,
dadurch gekennzeichnet, daß
die Umleitungsadresse eines kompatiblen Endgerätes ermittelt wird durch eine Abfrage bei dem ursprünglich gerufenen Endgerät.

**4.** Verfahren nach einem der vorherigen Patentansprüche,
dadurch gekennzeichnet, daß
die Prüfung, ob ein gerufenes Endgerät den Verbindungsaufbauwunsch erfüllen kann, durch das geeignete Netzelement in diesem Kommunikationsnetz geschieht.

**5.** Verfahren nach einem der vorherigen Patentansprüche,
dadurch gekennzeichnet, daß
eine beim Verbindungsaufbau mitgelieferte Teledienst-Kennung ausgewertet wird bei der Prüfung der Ausführbarkeit eines Verbindungsaufbauwunsches.

**6.** Verfahren nach einem der Patentansprüche 1 bis 3,
dadurch gekennzeichnet, daß
die Prüfung, ob ein gerufenes Endgerät den Verbindungsaufbauwunsch erfüllen kann durch eine Abfrage bei dem. angewählten Endgerät.

**7.** Verfahren nach einem der vorherigen Patentansprüche, wobei es sich bei dem Verbindungswunsch um unidirektionale Datenübertragung handelt, und die Verbindungsaufbaunachricht nicht an den ursprünglich adressierten Empfänger gesendet, sondern umgeleitet wird,
dadurch gekennzeichnet, daß
eine Benachrichtigung über das Eintreffen einer Nachricht erzeugt und versendet wird.

**8.** Verfahren nach Patentanspruch 7,
dadurch gekennzeichnet, daß
die Benachrichtigung in Form einer visuellen Anzeige in einem Endgerät des angewählten Teilnehmers erscheint.

**9.** Verfahren nach Patentanspruch 7,
dadurch gekennzeichnet, daß
die Benachrichtigung in Form einer Ansage über ein Endgerät des angewählten Teilnehmers geschieht.

**10.** Verfahren nach einem der vorherigen Patentansprüche,
dadurch gekennzeichnet, daß
für den gewünschten Teilnehmer kein Verbindungsaufbau möglich ist,
da kein für die Datenübertragung geeignetes Endgerät verfügbar ist, und
dem anrufenden Teilnehmer eine Nachricht übermittelt wird, bevor der Verbindungsaufbau abgebrochen wird.

**10.** Vorrichtung zur Zuordnung von eingehenden Verbindungswünschen zu Endgeräten in einem Kommunikationsnetz,
- mit Mitteln zur Ermittlung von Informationen über einen eingehenden Verbindungswunsch, und
- mit Mitteln zur Speicherung von Informationen über Teilnehmer in dem Kommunikationsnetz, und
- mit Mitteln zur Speicherung von Informationen über Endgeräte in diesem Kommunikationsnetz, insbesondere die Art des Geräts und die Zuordnung zu Teilnehmern, und
- mit Mitteln zur Auswertung der gewonnenen Informationen, und
- mit Mitteln zur Herstellung einer Verbindung zum vorher ermittelten, geeigneten Endgerät des gewünschten Teilnehmers.
